# EUROPEAN PATENT APPLICATION

(11) **EP 2 412 606 A1**
(43) Date of publication of application: **01.02.2012**
(21) Application number: 10755475.0
(22) Date of filing: 23.03.2010
(51) Int. Cl.: B62B 3/16

(54) **SHOPPING BASKET INCLUDING AN EXTRACTABLE PULL HANDLE**

(30) Priority: 23.03.2009 ES 200900785
(71) Applicant: ARAVEN, S.L., 50016 Zaragoza (ES)
(72) Inventor: PUÉRTOLAS SALANOVA, José, Antonio, E-50016 Zaragoza (ES); RODRIGUEZ ESTEBAN, Manuel, E-50016 Zaragoza (ES); GIMENO VERDEJO, Isabel, E-50016 Zaragoza (ES)
(74) Representative: Carpintero Lopez, Francisco
(86) International application number: PCT/ES2010/070168
(87) International publication number: WO 2010/109048

(57) **Abstract**

The present invention relates to a shopping basket with an extractable pull handle (12) which has an extracted position and a stowed position and comprises at least one vertical rod (12a) and at least one horizontal gripping rod (12b), comprising a base part (10), at least one cavity (14) for guiding at least one vertical rod (12a) and rolling means (16) for its movement, said pull handle (12) comprising a locking system that prevents the handle from moving accidentally from the extracted position to the stowed position.

## Description

### Object of the invention

As indicated by the title, the present invention relates to a stackable basket of the type used in shops and/or supermarkets for carrying items to the payment area, and having rolling elements and a pull handle for easier carrying.

More specifically, the shopping basket of the present invention relates to those in which the pull handle is extractable and has means for preventing said handle from being accidentally retracted.

### Background of the Invention

Different devices are generally used for shopping in convenience stores and supermarkets to help the buyer carry the products he is going to purchase. For example, there are large-sized and large capacity shopping carts designed for large purchases. Due to their large size, these carts are sometimes difficult to handle. There are also smaller-sized shopping baskets for purchasing fewer products.

To further aid the user with his shopping, baskets with rolling means at their base, which considerably aid in their movement, have been in existence for several years now. Said baskets can have extractable or collapsible pull handles, such as in patent application number P200700359 of the same applicant for example, which describes a shopping basket of the type that are susceptible of being stacked and incorporating rolling means at their base and an extractable pull handle for carrying them in an inclined manner with respect to the ground.

Shopping baskets of this type can present, however, the drawback that due to the use and wear of the materials, the extractable pull handle is very easily stowed, sometimes by itself, without the user applying any force, when it is in its vertical normal position.

Sometimes, even though the handle is not stowed by itself, instead of pulling on the basket, the user moves it by pushing it, so if said handle does not have a locking system, it is retracted or stowed, with the inconvenience and even the danger that this entails for the user.

### Description of the Invention

The shopping basket proposed by the present invention efficiently and inexpensively solves the aforementioned drawbacks, as it is a stackable shopping basket with an extractable pull handle which allows easily maintaining the handle in its extracted position while the basket is being used, while at the same time it allows easily stowing it when it is no longer going to be used.

To that end, it comprises a base part forming the basket itself, an extractable pull handle which has an extracted position and a stowed position comprising at least one vertical rod and at least one horizontal gripping rod, at least one cavity for guiding at least one vertical rod and rolling means for its movement.

The pull handle of the shopping basket according to the present invention further comprises a locking system that prevents the extractable pull handle from moving from the extracted position to the stowed position.

### Brief Description of the Drawings

To complement the description that is being made and for the purpose of aiding to better understand the features of the invention according to a preferred practical embodiment thereof, a set of drawings is attached as an integral part of said description in which the following has been depicted with an illustrative and non-limiting character:
Figure 1A shows a perspective view of a shopping basket according to a preferred embodiment of the present invention with the pull handle in the stowed position.
Figure 1B shows an enlarged view of the area of the peg of the shopping basket shown in Figure 1A.
Figure 2A shows a rear elevational view of the shopping basket shown in Figures 1A and 1B with the pull handle in an intermediate position.
Figure 2B shows an enlarged view of the area of the peg of the basket shown in Figure 2A.
Figure 3A shows a perspective view of the shopping basket shown in the preceding figures but with the pull handle in the extracted position.
Figure 3B shows an enlarged view of the area of the peg of the shopping basket shown in Figure 3A.
Figure 3C shows an enlarged view of the area of the push button of the basket of the invention.
Figure 4 shows a cross-section view and detail of the means used for locking the peg of the locking system.

### Preferred Embodiment of the Invention

As was mentioned and as can be seen in the attached figures, the present invention relates to a stackable shopping basket with an extractable pull handle which has an extracted position and a stowed position and comprises at least one vertical rod and at least one horizontal gripping rod comprising a base part forming the basket itself, at least one cavity for guiding at least one vertical rod and rolling means for its movement. The shopping basket according to the present invention further comprises a locking system that prevents the extractable pull handle from moving from the extracted position to the stowed position.

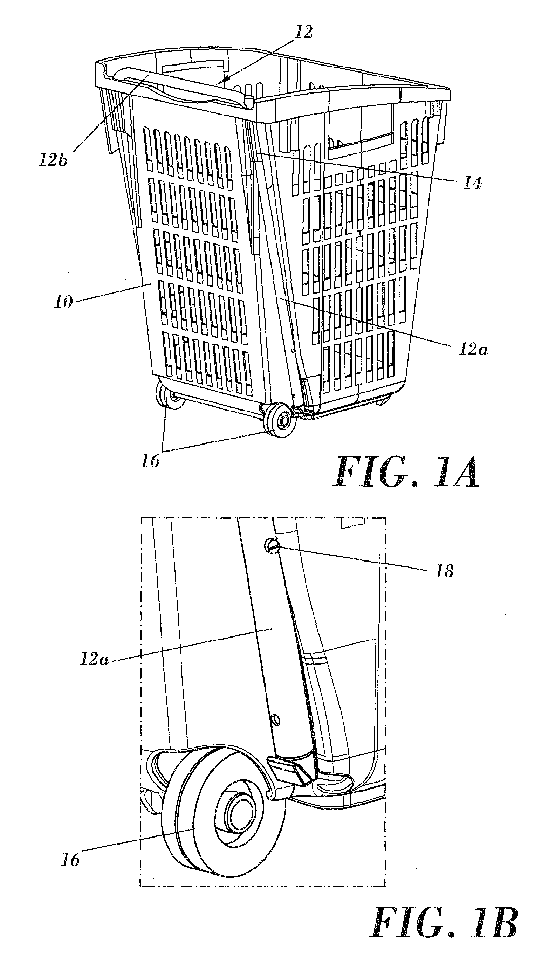

Figure 1A shows a shopping basket according to a possible embodiment of the present invention comprising a base part (10), a substantially U-shaped extractable pull handle (12) comprising two vertical rods (12a) and a horizontal gripping rod (12b), cavities (14) for guiding said vertical rods (12a) and rolling means (16) for its movement. The extractable pull handle (12) is presented in this figure in its stowed position.

Figure 1B is an enlarged view in which a detail of the lower part of one of the vertical rods (12a) can be seen. Said vertical rod (12a) has a peg (18) which, according to a preferred embodiment of the invention, is retractable and the function of which will be described below in relation to the following figures.

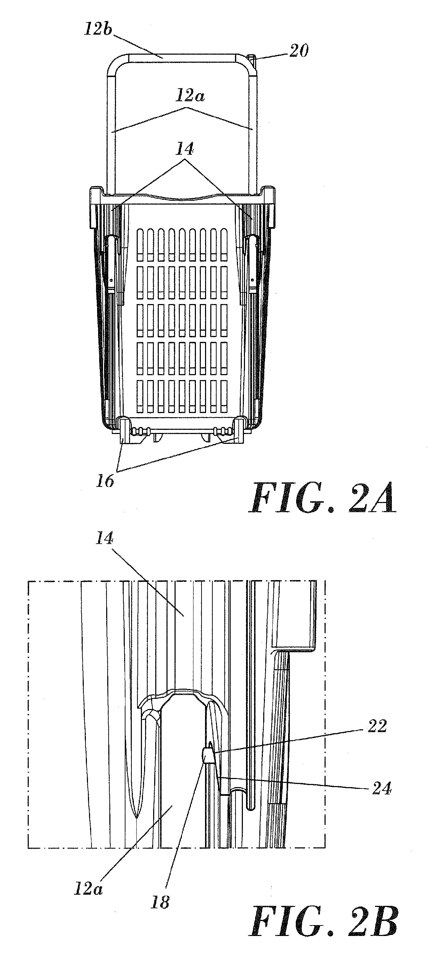

Figure 2A shows a rear view of the shopping basket according to the preferred embodiment of the present invention with the pull handle (12) in an intermediate position between its stowed position and its extracted position. In this Figure 2A, it is observed that the pull handle (12) further comprises a push button (20) between one of the vertical rods (12a) and the horizontal gripping rod (12b), the operation of which will also be explained in further detail below.

Figure 2B is an enlarged view of the area of the peg (18) when the pull handle (12) is in said intermediate position shown in Figure 2A. In this figure, it is observed that the peg (18), which is located in the vertical rod (12a), has an inclined surface (22) in its upper part. Said inclined surface (22) of the peg (18) acts together with another inclined surface (24) present in the base part (10) below the cavities (14). When said inclined surfaces (22) and (24) come into contact, the peg (18) moves to its retracted position before entering the cavities (14) and therefore allows extracting the pull handle (12).

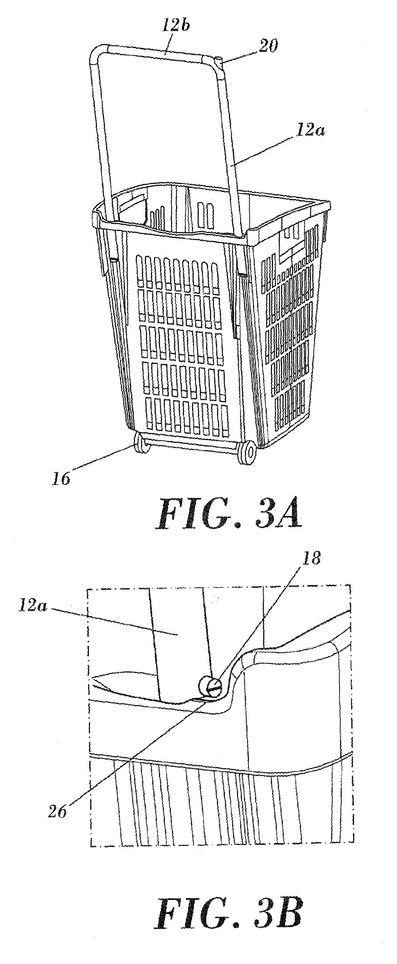

Figure 3A shows a shopping basket according to the preferred embodiment of the present invention with the pull handle (12) in its extracted position.

Figure 3B shows an enlarged view of the area of the peg (18) of the shopping basket shown in Figure 3A with the pull handle (12) in said extracted position. As can be observed, the peg (18), which is located in the vertical rod (12a) makes contact with a stop surface (26) in the upper part of the base part (10) such that it prevents the extractable pull handle (12) from going too far from the extracted position towards the stowed position.

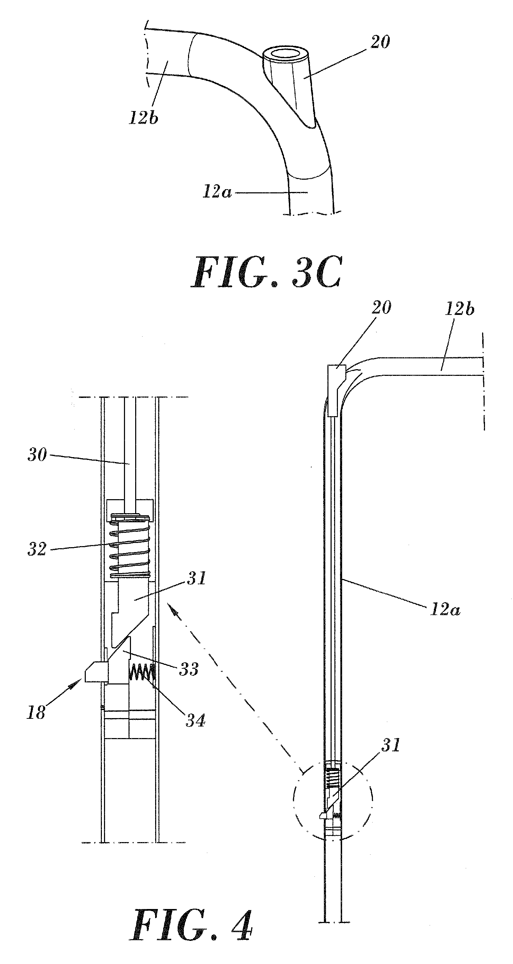

Figure 3C shows an enlarged view of the area of the push button (20) of the shopping basket shown in Figure 3A. In this preferred embodiment, said push button is located between the upper part of the same vertical rod (12a) in which the peg (18) is located and the horizontal gripping rod (12b). By pressing said push button 20, the peg (18) is retracted towards the inside of the vertical rod (12a), which thus allows stowing the pull handle (12) by sliding it downwards.

To prevent the peg 18 from being introduced inside the vertical rod 12a, according to the preferred embodiment of the present invention the shopping basket further comprises means (not shown in the figures) for maintaining the peg (18) in its extended position unless a force is exerted thereon.

In a possible embodiment of the present invention, said means for maintaining the peg (18) in its extended position can be, as can be seen in Figure 4, those formed by a rod (30) which, integrally with the button (20), is associated with a wedge-shaped element (31) provided with a recovery spring (32) such that upon pushing said button (20) the wedge (31) moves down, acting on a second wedge (33) integral with the peg (18), which also has a spring (34) allowing it to recover its rest position once pressure is no longer exerted on the button (20), causing the elevation of the wedge (31) as a result of the effect of the mentioned recovery spring (32).

According to another preferred embodiment of the present invention, the shopping basket comprises a peg (18) in each of the vertical rods (12a).

In yet another possible embodiment of the present invention, the peg (18) is fixed in the vertical rod (12a) whereas the base part (10) has a retractable stop surface in its upper part (not depicted), acting together with the peg (18) in the vertical rod (12a), preventing the pull handle (12) from returning to its stowed position from its extracted position. When the stop surface is retracted, the pull handle (12) can be stowed in its stowed position.

Likewise, the push button (20) is susceptible of being located in any other position of the upper part of the pull handle (12) other than in the upper part of the vertical rod (12a) in which the peg (18) is located, for example, in the center of the horizontal gripping rod (12b) of the pull handle (12).

The button (20) could also be replaced with a lever or the like that allows performing the same function.

In even another possible embodiment of the invention not depicted, the extractable pull handle (12) can have a vertical rod and a horizontal rod, or two vertical rods and two horizontal rods, the pull handle thus having a substantially O-shaped end shape.

Furthermore, even though the locking system of the extractable pull handle according to the present invention has been described as a peg acting together with a stop surface to lock said handle, person skilled in the art will understand that the present invention is not limited to this, and other locking systems are equally possible, without this departing from the teachings of the invention. For example, instead of a peg (18), a clamp-type fixing could be used, performing the same functions similarly to the aforementioned peg.

## Claims

1. Shopping basket with an extractable pull handle (12), wherein said basket is stackable and comprises a base part (10) with rolling means (16) for its movement, and wherein the pull handle (12) comprises at least one vertical rod (12a), at least one horizontal gripping rod (12b) and at least one cavity (14) for guiding the vertical rod (12a), **characterized in that** it further comprises a locking system that prevents the extractable pull handle (12) from moving accidentally from the extracted position to the stowed position.

2. Shopping basket according to claim 1, **characterized in that** the locking system consists of at least one peg (18) in said at least one vertical rod (12a) such that when the pull handle (12) is in its extracted position, the peg (18) makes contact with a stop surface (26) in the upper part of the base part (10), which prevents stowing the pull handle (12).

3. Shopping basket according to claim 2, **characterized in that** the peg (18) is retractable.

4. Shopping basket according to claim 3, **characterized in that** it further comprises means for maintaining the peg (18) in its extended position unless a force is exerted thereon.

5. Shopping basket according to any of claims 2 to 4, **characterized in that** the peg (18) has in its upper part an inclined surface (22) acting together with another inclined surface (24) present in the base part (10) below said at least one cavity (14), such that by means of said inclinations (22, 24) the peg (18) moves to its retracted position before entering the cavities (14) and allows extracting the pull handle (12).

6. Shopping basket according to any of claims 2 to 5, **characterized in that** it further comprises a push button (20), such that by pressing the push button (20) the peg (18) is retracted towards the inside of said at least one vertical rod (12a), which allows stowing the pull handle (12) by sliding it downwards.

7. Shopping basket according to any of the preceding claims, **characterized in that** the means for maintaining the peg (18) in the extended position comprise a rod (30) which, integrally with the button (20), is associated with a wedge-shaped element (31) provided with a recovery spring (32) such that upon pushing said button (20) the wedge (31) moves down, acting on a second wedge (33) integral with the peg (18), which has a spring (34) allowing it to recover its rest position once pressure is no longer exerted on the button (20).

8. Shopping basket according to claim 6, **characterized in that** the push button (20) is located between the upper part of said at least one vertical rod (12a) in which the peg (18) is located and said at least one horizontal gripping rod (12b).

9. Shopping basket according to claim 1, **characterized in that** it comprises a peg (18) fixed in the vertical rod (12a) whereas the base part (10) has a retractable stop surface in its upper part acting together with the peg (18) in the vertical rod (12a), preventing the pull handle (12) from returning to its stowed position from its extracted position.
